(19) 

Europäisches
Patentamt
European
Patent Office
Office européen
des brevets

(11)  **EP 3 506 573 B1**

(12)  **EUROPEAN PATENT SPECIFICATION**

(45) Date of publication and mention
of the grant of the patent:
**15.06.2022  Bulletin 2022/24**

(21) Application number: **17842938.7**

(22) Date of filing: **23.08.2017**

(51) International Patent Classification (IPC):
**H04L 12/801** *(2013.01)*   **H04L 12/815** *(2013.01)*

(52) Cooperative Patent Classification (CPC):
**H04L 47/22; H04L 47/15**

(86) International application number:
**PCT/CN2017/098633**

(87) International publication number:
**WO 2018/036516 (01.03.2018 Gazette 2018/09)**

(54) **METHOD AND SYSTEM FOR TRAFFIC MANAGEMENT, PACKET SWITCHING DEVICE AND USER DEVICE**

VERFAHREN UND SYSTEM ZUR VERKEHRSVERWALTUNG,
PAKETUMSCHALTUNGSVORRICHTUNG UND BENUTZERVORRICHTUNG

PROCÉDÉ ET SYSTÈME DE GESTION DE TRAFIC, DISPOSITIF DE COMMUTATION DE PAQUETS
ET DISPOSITIF D'UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.08.2016  CN 201610740576**

(43) Date of publication of application:
**03.07.2019  Bulletin 2019/27**

(73) Proprietor: **ZTE Corporation**
**Shenzhen, Guangdong 518057 (CN)**

(72) Inventors:
• **WEN, Taichuan**
**Shenzhen**
**Guangdong 518057 (CN)**

• **ZHAO, Yuhai**
**Shenzhen**
**Guangdong 518057 (CN)**

(74) Representative: **Aipex B.V.**
**P.O. Box 30223**
**3001 DE Rotterdam (NL)**

(56) References cited:
**EP-A2- 1 124 356     WO-A2-2007/113645**
**CN-A- 102 202 001     CN-A- 104 869 024**
**CN-A- 105 227 371     US-A1- 2015 229 424**

## Description

### TECHNICAL FIELD

The present disclosure relates to the field of communication, and in particular, to a traffic control method and system, a packet switching apparatus, and a user equipment.

### BACKGROUND

In existing art, services of a Packet Optical Transport Network (PTN) are classified into two types according to forwarding characteristics thereof: unicast services and multicast services. In the unicast service, the traffic enters a device through an ingress port, and is forwarded to leave the device through merely one egress port. In the multicast service, the traffic enters a device through an ingress port and is forwarded to leave the device through at least one egress port, wherein multiple packets are duplicated inside the device, so that each egress port has a packet.

During deployment of a network by a telecom operator, the unicast service is applied to a more important application scenario, such as base station backhaul service (Backhaul), and the multicast services are generally applied to pushing services, such as video broadcasting services. As multicast traffic may be duplicated, its total traffic will expand. In a scenario of a shared link or a shared virtual tunnel, traffic control may be applied to unicast services and multicast services to avoid mutual influence, in order to meet service quality requirements by clients.

In existing art, there are two common implementations for traffic control in a distributed-system packet forwarding device.

Before introducing the technical solutions in the existing art, the following is a description of several technical terms, for example, a packet processor (referred to as PP), a switch access (referred to as SA), and a switch fabric (referred to as SF), and traffic management (referred to as TM).

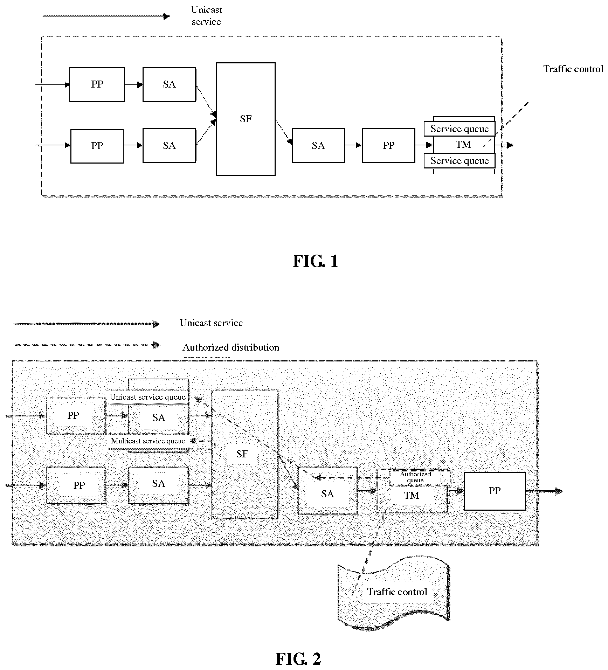

The first implementation is to achieve traffic management before entering a network port. FIG. 1 is a schematic diagram illustrating traffic management by a network-side unit of a packet switching apparatus according to existing art. As shown in FIG. 1, packets pass through the PP, and are encapsulated and then go for traffic management. The packets go to different queues according to service priorities. Through configuration of shaping parameters of the queues, traffic management may be implemented. In the existing art, unicast packets and multicast packets enter different service queues.

The first implementation of traffic control method described above has the following problems: service packets from different source ports may be transmitted out through a same network port, that is, and the packets may be in a same queue, in this case, packets from different source ports cannot be distinguished during queue scheduling, such that packets cannot be discarded according to preset weights when performing congestion avoiding; additionally, if the traffic exceeds information rate of a network-side unit port of a egress PTN device, a traffic control backpressure signal to buffer service packets cannot be correctly transmitted to an entry port of the service to reduce the packets transmitted to the egress port. This does not meet the requirement for end-to-end implementation of traffic control by the operator.

In the distributed-system packet forwarding device, the second implementation of traffic control achieves traffic management in a manner of uplink authorization request and downlink authorization response when a unicast packet passes through a switching network. FIG. 2 is a schematic diagram illustrating traffic management by a switching-side unit of a PTN device according to existing art. As shown in FIG. 2, a switching access unit of the PTN device that implements the traffic control transmits, according to shaping information, authorization information to unicast service queues that need to transmit packets, and the unicast service queues transmit packets with corresponding traffic according to authorized sizes. Traffic management of unicast service queues may be implemented through this collaborative manner. Multicast service packets may be transmitted to the switching access unit of the egress PTN device through the switching network in a self-authorization manner.

By using the second implementation of traffic control, the backpressure signal of the traffic control can be accurately transmitted to uplink queues when congestion occurs, such that packets can be buffered, the rate of packet transmission may be reduced, and the congestion can be alleviated. However, there are following problems: the multicast service packet adopts a manner of self-authorization, thus traffic control cannot be accurately implemented.

In the existing art, P2MP is a method provided by IETF to implement a one-way point-to-multipoint service manner. It is characterized by: there is one (and only one) source (head end), one or more sinks (tail end); and the service is one-way, in a direction from source to sink.

In the existing art, there may be different methods for implementing the point 2 multiple point (P2MP) method, including P2MP LSP (Label Switched Path) and P2MP PW (Pseue-wire). For example, an application document "Method, network node and system for implementing point-to-multipoint multicast" with the patent publication No. CN103716169A describes a method for implementing a point-to-multipoint multicast service through the P2MP LSP; an application document "Method and apparatus for establishing multicast data channel in network virtual system" with the patent publication No. CN103430499A describes establishment and release of multicast data services through the P2MP PW.

In the existing art, the telecom operators use the P2MP to deploy video broadcasting service, and raise a requirement for P2MP traffic control, that is, the committed information rate (PIR) and peak information rate (PIR) of the P2MP service should not be squeezed by other services when passing through a PTN network. There are two scenarios as described below.

(1) Squeezing between different site services

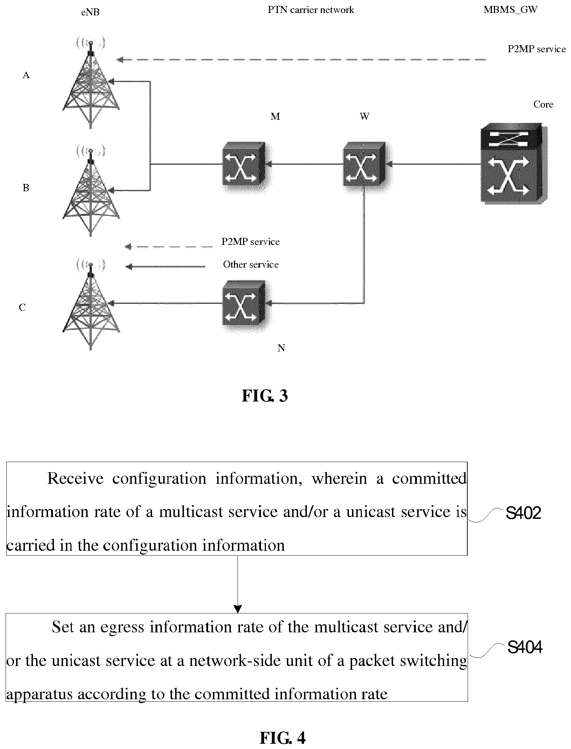

FIG. 3 is a diagram illustrating a P2MP application scenario according to existing art. As shown in FIG. 3, an eNB (Evolved Node B, Lte evolved base station) receives a P2MP service of a core network through a PTN network, for example, eNB A in FIG. 3 receives a P2MP service, eNB A and the eNB B share part of links (such as, the link between node Core to node W, and the link between node W to node M). When congestion occurs, the information rate of the P2MP service of eNB A may be squeezed by traffic of eNB B, which is a problem to be solved. Multimedia Broadcast Multicast Service Gateway is referred to as MBMS_GW.

(2) Squeezing when different services of a same tunnel are used by a same site

There is squeezing between the eNB's own services. As shown in the figures, services of the eNB C include P2MP services and other unicast services (such as traffic for management information). There may also be traffic squeezing in these services when congested.

Document WO2007113645 (A2) discloses a system for making connections in a telecommunications system that includes a network for transporting communications between selected subscriber connections, and a wireless network for coupling connections to the network. The network and wireless network are interfaced with a traffic management element and a radio controller shared by connections, with the traffic management element and the radio controller forming a single integrated network element. Connections are routed from the wireless network to the network via the single integrated network element.

Currently, there is no effective solution for the problem that the traffic is difficult to control in existing art.

**SUMMARY**

Embodiments of the present disclosure provide a traffic control method and system, a packet switching apparatus, and a user equipment, to at least solve the problem that the service traffic in the existing art is difficult to control.

According to an embodiment of the present disclosure, a traffic control method according to Claim 1 is provided.

The setting the egress information rate of the multicast service and/or the unicast service at a packet switching apparatus according to the committed information rate includes: setting the egress information rate of the multicast service and/or the unicast service at the network-side unit of the packet switching apparatus to be greater than or equal to the committed information rate.

The setting the egress information rate of the multicast service and/or the unicast service at the packet switching apparatus according to the committed information rate includes one of the following steps: setting, in a case where a first committed information rate of the unicast service is carried but a second committed information rate of the multicast service is not carried in the configuration information, a first egress information rate of the unicast service to be greater than or equal to the first committed information rate, and setting a difference between a preset total egress information rate and the first egress information rate as a second egress information rate of the multicast service; setting, in a case where the second committed information rate of the multicast service is carried but the first committed information rate of the unicast service is not carried in the configuration information, the second egress information rate of the multicast service to be greater than or equal to the second committed information rate, and setting a difference between the preset total egress information rate and the second egress information rate as the first egress information rate of the unicast service; setting, in a case where in a case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information rate; and setting, in a case where the first committed information rate of the unicast service and the second committed information rate of the multicast service are not carried in the configuration information, the first egress information rate of the unicast service to be half of the preset total egress information rate, and setting the second egress information rate of the multicast service to be half of the preset total egress information rate.

The step of setting, in the case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information rate includes: the first egress information rate satisfying the formula $A1= (\dfrac{B1}{B1+B2})*C$ , wherein A1 represents the first egress information rate, B1 represents the first committed information rate, B2 represents the second committed information rate, and C represents the preset total egress information rate; and the second egress information rate satisfying

the formula $A2= (\dfrac{B2}{B1+B2})*C$ , wherein A2 represents the second egress information rate, B1 represents the first committed information rate, B2 represents the second committed information rate, and C represents the preset total egress information rate.

A step of setting the egress information rate of the multicast service and/or the unicast service at a network-side unit of a packet switching apparatus according to the committed information rate includes: setting, by a network-side unit of the packet switching apparatus, the egress information rate of the multicast service and/or the unicast service at the network-side unit of the packet switching apparatus according to the committed information rate.

The configuration information further includes at least one of: a service parameter, a peak information rate, a committed burst size, and a peak burst size.

The method further includes: duplicating, by a switching access unit of the packet switching apparatus, a packet of the multicast service according to the service parameter, wherein the service parameter carries one of: an identification ID number of the multicast service, an egress logical port to which a multicast packet of the multicast service is to be duplicated, a number of duplications corresponding to the egress logical port, wherein the egress logical port is located in a network-side unit of the packet switching apparatus.

The method further includes: an information rate parameter of the multicast service is applicable to multiple egress logical ports of the network-side unit of the packet switching apparatus, and the multiple egress logical ports are configured with the same information rate parameter, wherein the information rate parameter includes: the committed information rate, the peak information rate, the committed burst size, and the peak burst size.

According to another embodiment of the present disclosure, a traffic control method according to Claim 7, is further provided

The configuration information further includes at least one of: a service parameter, a peak information rate, a committed burst size, and a peak burst size.

According to another embodiment of the present disclosure, a traffic control device, configured as a packet switching apparatus, according to Claim 9, is further provided.

The setting module is configured to set the egress information rate of the multicast service and/or the unicast service at the network-side unit of the packet switching apparatus to be greater than or equal to the committed information rate.

The setting module is further configured to perform one of the following steps: setting, in a case where a first committed information rate of the unicast service is carried but a second committed information rate of the multicast service is not carried in the configuration information, a first egress information rate of the unicast service to be greater than or equal to the first committed information rate, and setting a difference between a preset total egress information rate and the first egress information rate as a second egress information rate of the multicast service; setting, in a case where the second committed information rate of the multicast service is carried but the first committed information rate of the unicast service is not carried in the configuration information, the second egress information rate of the multicast service to be greater than or equal to the second committed information rate, and setting a difference between the preset total egress information rate and the second egress information rate as the first egress information rate of the unicast service; setting, in a case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information rate; and setting, in a case where the first committed information rate of the unicast service and the second committed information rate of the multicast service are not carried in the configuration information, the first egress information rate of the unicast service to be half of the preset total egress information rate, and setting the second egress information rate of the multicast service to be half of the preset total egress information rate.

The step of setting, in the case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information rate includes: the first egress information rate satisfying the formula $A1= (\frac{B1}{B1+B2})*C$, wherein A1 represents the first egress information rate, B1 represents the first committed information rate, B2 represents the second committed information rate, and C represents the preset total egress information rate; and the second egress information rate satisfying the formula $A2= (\frac{B2}{B1+B2})*C$, wherein A2 represents the second egress information rate, B1 represents the first committed information rate, B2 represents the second committed information rate, and C represents the preset total egress information rate.

The setting module is further configured to: set the egress information rate of the multicast service and/or the unicast service at a network-side unit of the packet switching apparatus according to the committed information rate.

The setting module is further configured to: set, through a switching-side unit of the packet switching apparatus, the egress information rate of the unicast service at the switching-side unit of the packet switching apparatus according to the committed information rate of the unicast service.

The configuration information further includes at least one of: a service parameter, a peak information rate, a committed burst size, and a peak burst size.

The setting module is further configured to: duplicate, through a switching access unit of the packet switching apparatus, a packet of the multicast service according to the service parameter, wherein the service parameter carries one of: an identification ID number of the multicast service, an egress logical port to which a multicast packet of the multicast service is to be duplicated, a number of duplications corresponding to the egress logical port, wherein the egress logical port is located in the network-side unit of the packet switching apparatus.

An information rate parameter of the multicast service is applicable to multiple egress logical ports of the network-side unit of the packet switching apparatus, and the multiple egress logical ports are configured with the same information rate parameter, wherein the information rate parameter includes: the committed information rate, the peak information rate, the committed burst size, and the peak burst size.

According to another embodiment of the present disclosure, a traffic control system according to Claim 10 is further provided .

One of the following scenarios may occurs: setting, by the packet switching apparatus and in a case where a first committed information rate of the unicast service is carried but a second committed information rate of the multicast service is not carried in the configuration information transmitted by the user equipment, a first egress information rate of the unicast service to be greater than or equal to the first committed information rate, and setting a difference between a preset total egress information rate and the first egress information rate as a second egress information rate of the multicast service; setting, by the packet switching apparatus and in a case where the second committed information rate of the multicast service is carried but the first committed information rate of the unicast service is not carried in the configuration information transmitted by the user equipment, the second egress information rate of the multicast service to be greater than or equal to the second committed information rate, and setting a difference between the preset total egress information rate and the second egress information rate as the first egress information rate of the unicast service; setting, by the packet switching apparatus and in a case where the first committed information rate of the unicast service and the second committed information rate of the multicast service are carried in the configuration information transmitted by the user equipment, the first egress information rate of the unicast service to be greater than or equal to the first committed information rate, and setting the second egress information rate of the multicast service to be greater than or equal to the second committed information rate; and setting, by the packet switching apparatus and in a case where the first committed information rate of the unicast service and the second committed information rate of the multicast service are not carried in the configuration information transmitted by the user equipment, the first egress information rate of the unicast service to be half of the preset total egress information rate, and setting the second egress information rate of the multicast service to be half of the preset total egress information rate.

The setting, by the packet switching apparatus and in the case where the first committed information rate of the unicast service and the second committed information rate of the multicast service are carried in the configuration information transmitted by the user equipment, the first egress information rate of the unicast service to be greater than or equal to the first committed information rate, and setting the second egress information rate of the multicast service to be greater than or equal to the second committed information rate includes: the first egress information rate satisfying the formula $A1= (\frac{B1}{B1+B2})*C$, wherein A1 represents the first egress information rate, B1 represents the first committed information rate, B2 represents the second committed information rate, and C represents the preset total egress information rate; and the second egress information rate satisfying the formula $A2=(\dfrac{B2}{B1+B2})*C$ , wherein A2 represents the second egress information rate, B1 represents the first committed information rate, B2 represents the second committed information rate, and C represents the preset total egress information rate.

According to another embodiment of the present disclosure, a storage medium is further provided. The storage medium is configured to store program code executable to perform the following steps: receiving configuration information, wherein a committed information rate of a multicast service and/or a unicast service is carried in the configuration information; and setting an egress information rate of the multicast service and/or the unicast service at a network-side unit of a packet switching apparatus according to the committed information rate.

The storage medium is further configured to store program code executable to perform the following steps: transmitting, by a user equipment, configuration information to a packet switching apparatus, wherein a committed information rate of a multicast service and/or a unicast service is carried in the configuration information; and setting, by the packet switching apparatus, an egress information rate of the multicast service and/or the unicast service at the network-side unit of the packet switching apparatus according to the committed information rate.

According to another embodiment of the present disclosure, a storage medium is further provided. The storage medium includes stored program which is executable to perform the method of any of the above embodiments.

According to another embodiment of the present disclosure, a processor is further provided. The processor is configured to run a program which is executable to perform the method of any of the above embodiments.

According to the present disclosure, the service configuration information that is transmitted to the network management side carries the committed information rate, which is set to indicate the egress information rate finally allocated to the unicast service or the multicast service, and when the information rate allocation is performed, the network management side allocates information rate for the unicast service or the multicast service according to the committed information rate. Thereby, a problem that the service traffic is difficult to guarantee in existing technology can be solved, and a user requirement for successful unicast service or multicast service can be achieved.

## BRIEF DESCRIPTION OF THE DRAWINGS

The drawings described herein, constituting a part of the present disclosure, are provided to provide a further understanding of the present disclosure, and are not intended to limit the present disclosure inappropriately. In the drawings,

FIG. 1 is a schematic diagram illustrating traffic management by a network-side unit of a packet switching apparatus according to existing art;

FIG. 2 is a schematic diagram illustrating traffic management by a switching-side unit of the packet switching apparatus according to existing art;

FIG. 3 is a diagram illustrating a P2MP application scenario according to existing art;

FIG. 4 is a flow chart illustrating a traffic control method according to an embodiment of the present disclosure;

FIG. 5 is a diagram illustrating implementation of a two-stage traffic management according to an exemplary embodiment of the present disclosure;

FIG. 6 is a flow chart of packet when implementing the two-stage traffic management according to an exemplary embodiment of the present disclosure;

FIG. 7 is a schematic diagram illustrating traffic control according to a specific Embodiment 1 of the present disclosure;

FIG. 8 is a schematic diagram illustrating traffic control according to a specific Embodiment 2 of the present disclosure;

FIG. 9 is a schematic diagram illustrating traffic control according to a specific Embodiment 3 of the present disclosure;

FIG. 10 is a schematic diagram illustrating traffic control according to a specific Embodiment 4 of the present disclosure;

FIG. 11 is a block diagram illustrating a hardware structure of a mobile terminal implementing a traffic control method according to an embodiment of the present disclosure; and

FIG. 12 is a block diagram illustrating a structure of a traffic control device applied to a packet switching apparatus according to an embodiment of the present disclosure.

## DETAILED DESCRIPTION

The present disclosure will be described in detail below with reference to the drawings in conjunction with embodiments. It should be noted that the embodiments in the present application and the features in the embodiments may be combined with each other without conflict.

It should be understood that the terms "first", "second", and the like in the Description and Claims of the present disclosure are used to distinguish similar objects, and are not necessarily to describe a particular sequence or order.

Embodiment 1

Committed Information Rate (CIR), in bits per second, is a data transmission rate committed by an operator network for a service. When the network is congested, the network guarantees that the committed information rate can be successfully transmitted.
Peak Information Rate (PIR), in bits per second, is a maximum peak information rate provided by an operator network for a service. When the network is congested, traffic exceeding the committed information rate (that is, information rate equivalent to the PIR minus the CIR) will be discarded first. Therefore, the operator network does not guarantee that the traffic exceeding the committed information rate can be successfully transmitted.
Committed Burst Size (CBS) is the packet traffic committed by the operator network to transmit within time Tc.
Peak Burst Size (PBS) is the maximum burst size allowed by the operator network for a client within time Tc.
Switch access unit of a PTN device is referred to as a SA.
The technical solution described in the present disclosure may be implemented in a packet switching apparatus, which is also referred to as a packet switching device. Specifically, when performing the technical solution in the present disclosure, each step may be performed by a part of the packet switching apparatus, such as a switching-side unit, a network-side unit, a switching access unit in the packet switching apparatus. It should be noted that the packet switching apparatus includes a PTN device.
In this embodiment, a traffic control method running on the above packet switching apparatus is provided. FIG. 4 is a flow chart illustrating a traffic control method according to the present disclosure. As shown in FIG. 4, the flow includes the following steps S402-S404.
At step S402, configuration information is received, wherein a committed information rate of a multicast service and/or a unicast service is carried in the configuration information.
At step S404, an egress information rate of the multicast service and/or the unicast service at a network-side unit of a packet switching apparatus is set according to the committed information rate.
Through the above steps, configuration information carrying the committed information rate of a multicast service and/or a unicast service is received, and an egress information rate of the multicast service and/or the unicast service at a network-side unit of the packet switching apparatus is set according to the committed information rate, thereby a problem that the service traffic is difficult to control in existing technology can be solved, and a user requirement for successful unicast service or multicast service can be achieved.
The egress information rate of the multicast service and/or the unicast service at the network-side unit of the packet switching apparatus is set to be greater than or equal to the committed information rate.
The step of setting the egress information rate of the multicast service and/or the unicast service at the packet switching apparatus according to the committed information rate includes one of the following situations: setting, in a case where a first committed information rate of the unicast service is carried but a second committed information rate of the multicast service is not carried in the configuration information, a first egress information rate of the unicast service to be greater than or equal to the first committed information rate, and setting a difference between a preset total egress information rate and the first egress information rate as a second egress information rate of the multicast service; setting, in a case where the second committed information rate of the multicast service is carried but the first committed information rate of the unicast service is not carried in the configuration information, the second egress information rate of the multicast service to be greater than or equal to the second committed information rate, and setting a difference between the preset total egress information rate and the second egress information rate as the first egress information rate of the unicast service; setting, in a case where in a case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information rate; and setting, in a case where the first committed information rate of the unicast service and the second committed information rate of the multicast service are not carried in the configuration information, the first egress information rate of the unicast service to be half of the preset total egress information rate, and setting the second egress information rate of the multicast service to be half of the preset total egress information rate.
In the case where the first committed information rate of the unicast service and the second committed information rate of the multicast service are carried in the configuration information, the information rate that should be allocated for the unicast service and the multicast service may be calculated by the following formulas.

$$A1 = \left(\frac{B1}{B1+B2}\right) * C$$

The first egress information rate satisfies the formula , wherein A1 represents the first egress information rate, B1 represents the first committed information rate, B2 represents the second committed information rate, and C represents the preset total egress information rate; and the second egress information rate satisfies the formula

$$A2= \left(\frac{B2}{B1+B2}\right)*C$$

, wherein A2 represents the second egress information rate, B1 represents the first committed information rate, B2 represents the second committed information rate, and C represents the preset total egress information rate.

The above two formulas indicate that, when allocating the unicast service and the multicast service, the preset total egress information rate is divided proportionally according to proportions of the committed information rate of the unicast service and the committed information rate of the multicast service, to achieve an optimal allocation result.

A network-side unit of the packet switching apparatus sets the egress information rates of the multicast service and/or the unicast service at a network-side unit of the packet switching apparatus according to the committed information rates.

Optionally, prior to the egress information rates of the multicast service and/or the unicast service at a network-side unit of the packet switching apparatus are set according to the committed information rates, the switching-side unit of the packet switching apparatus sets the egress information rate of the unicast service at the switching-side unit of the packet switching apparatus according to the committed information rate of the unicast service.

In the above two optional embodiments, the switching-side unit of the packet switching apparatus guarantees the committed information rate of the unicast service, and calculates the ratio of the committed information rate of the unicast service and the committed information rate of the multicast service. Thereafter, the network-side unit of the packet switching apparatus performs overall management of the service information rate according to the calculated ratio.

The configuration information further includes at least one of: a service parameter, a peak information rate, a committed burst size, and a peak burst size.

The switching access unit of the packet switching apparatus duplications a packet of the multicast service according to the service parameter, wherein the service parameter carries one of: an identification ID number of the multicast service, an egress logical port to which a multicast packet of the multicast service is to be duplicated, a number of duplications corresponding to the egress logical port, wherein the egress logical port is located in a network-side unit of the packet switching apparatus.

An information rate parameter of the multicast service is applicable to multiple egress logical ports of the network-side unit of the packet switching apparatus, and the multiple egress logical ports are configured with a same information rate parameter. The multiple egress logical ports are ports related to the multicast service, and the information rate parameter includes: the committed information rate, the peak information rate, the committed burst size, and the peak burst size.

In order to effectively solve the above problem, in the method and apparatus provided by the present disclosure, the switching access unit of the packet switching apparatus is utilized to implement logical duplication of the multicast packet to control the sum of (total) traffic after the packet duplication, so as to prevent it from exceeding the processing capability of a subsequent processing unit; a two-stage traffic management (TM) is utilized to implement traffic management of the multicast service, i.e., traffic management by the switching-side unit of the packet switching apparatus implements traffic management of the unicast service, to achieve fair discard when the unicast service is congested, and traffic management by the network-side unit of the packet switching apparatus achieves overall traffic control for the unicast service and the multicast service.

A detailed description is provided in conjunction with the exemplary embodiments of the present disclosure.

The method described in the present disclosure includes the following steps. It should be noted that the following steps are performed by various parts of the packet switching apparatus, and the various parts generally belong to the side of the packet switching apparatus.

The first step is to configure multicast services and unicast services, including service parameters and information rate parameters (committed information rate, peak information rate, committed burst size, and peak burst size). It is further explained that the information rate parameters of the multicast service is effective and same for multiple egress logical ports of the service.

The second step is multicast service forwarding and logical duplication.

After the multicast service packet is multicast through the switching network, the packet is forwarded to a switching access unit of an egress packet switching apparatus. The switching access unit of the packet switching apparatus implements multicast packet duplication according to the configured multicast service information.

Further, when configuring the multicast service, the duplication information list of the multicast service, including the multicast ID number (unique identifier), a list of destination port to which the packet is duplicated, and a number of duplications for each destination port, is calculated. The switching access unit of the packet switching apparatus performs packet duplication according to the information list, and the duplicated multicast packet is schedules to subsequent processing units by a scheduling unit.

The third step is unicast service forwarding and traffic control.

Through an implementation manner of uplink authorization request and downlink authorization response, traffic control for unicast packet is implemented at the switching-side unit TM of the packet switching apparatus, realizing the committed information rate and peak information rate of client configuration.

A unicast packet and a multicast packet may exist at a same egress port. According to weighted round-robin scheduling algorithm, a scheduling unit sets the weight, such that the committed information rate of the unicast packet can be all scheduled to subsequent processing units. Further, the weighted scheduling weight is calculated as follows: the scheduling weight of unicast packet is equal to the ratio of sum of committed information rate of egress port and port rate of the egress port. Traffic control of multicast packets cannot be implemented at the switching-side unit TM of the packet switching apparatus, but the scheduling weights of unicast packets and multicast packets may ensure that packets within the committed information rate can be scheduled to pass in a scenario where the egress pot is congested since the total traffic of unicast packets and multicast packets is too large.

Further, Table 1 is a service scheduling weight table according to an embodiment of the present disclosure. The scheduling weights of the unicast services and multicast services can be calculated as shown in Table 1.

Table 1

| Scenario number | Sum of committed information rate of unicast service | Sum of committed information rate of multicast service | Scheduling weight of unicast service | Scheduling weight of multicast service |
|---|---|---|---|---|
| 1 | Sum(unicast) | No committed information rate | Sum(unicast)/Port rate | (Port rate - Sum (unicast))/Port rate |
| 2 | No committed information rate | No committed information rate | 0.5 | 0.5 |
| 3 | Sum(unicast) | Sum(multicast) | Sum(unicast)/Port rate | Sum(multicast)/Port rate |
| 4 | No committed information rate | Sum(multicast) | (Port rate - Sum (multicast))/Port rate | Sum(multicast)/Port rate |

The fourth step is the traffic control of the multicast service.

After passing a packet processor, the unicast packet and the multicast packet are forwarded to the network-side unit TM (i.e., the second stage TM) of the packet switching apparatus. The scheduling unit and the shaping unit of the network-side unit TM of the packet switching apparatus implement traffic control of the multicast service, since the port rate of the egress port is fixed when configuring the service (that is, the rate when the service packet leaves the device from the egress port is fixed).

Further, the scheduling weight of the scheduling unit controls a scheduling ratio of a unicast packet and a multicast packet. The scheduling weight of unicast packet is equal to a ratio of sum of committed information rate of unicast packet of the egress port and the port rate of egress port, and the multicast packet scheduling weight is equal to a ratio of sum of committed information rate of multicast packet and the port rate of egress port. Through this configuration manner, the egress information rate of the shaping unit is a fixed egress port rate. When the egress port is congested, the sum of committed information rates of the unicast packet and the multicast packet is guaranteed. In this case, the scheduling weight of unicast packets $\times$ the egress port rate=the sum of committed information rate of the unicast packets, and the scheduling weight of multicast packets $\times$ the egress port rate=the sum of committed information rate of multicast packets.

Further, the unicast service packet traffic meets the requirement of committed information rate. Even if the multicast packet is duplicated, such that the multicast traffic is flooded, the committed information rate of the unicast service is guaranteed to pass, and shares the port information rate with multicast packets. Similarly, multicast service packet traffic also meets the requirement of committed information rate.

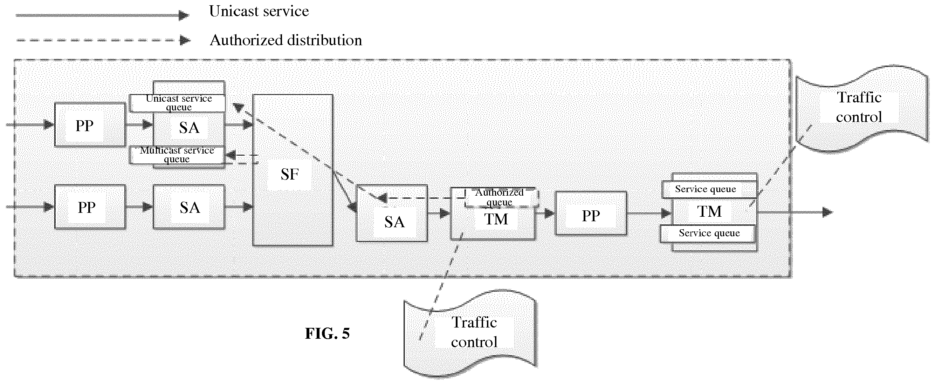

FIG. 5 is a diagram illustrating implementation of a two-stage TM according to an exemplary embodiment of the present disclosure.

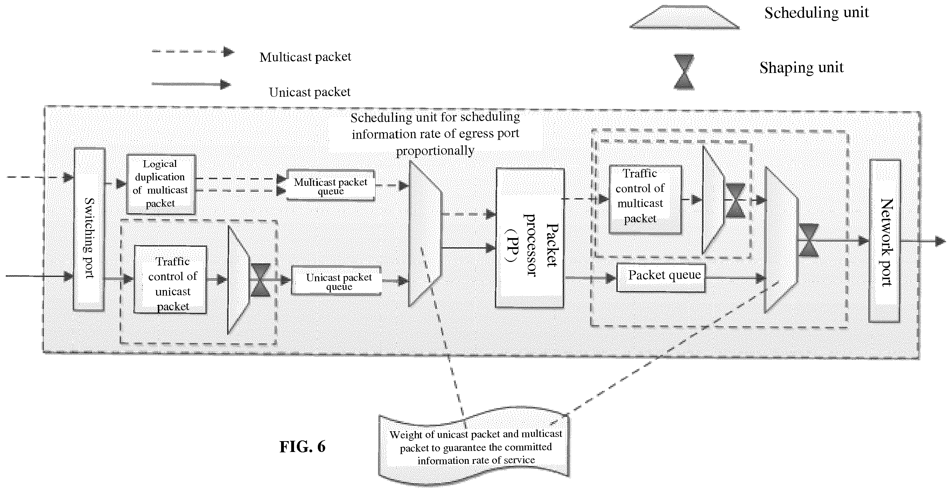

FIG. 6 is a flow chart of packets when implementing the two-stage TM according to an exemplary embodiment of the present disclosure.

The following is a detailed description in combination with three optional specific embodiments.

Specific Embodiment 1: the unicast service being configured with information rate parameter while the multicast service with no information rate parameter

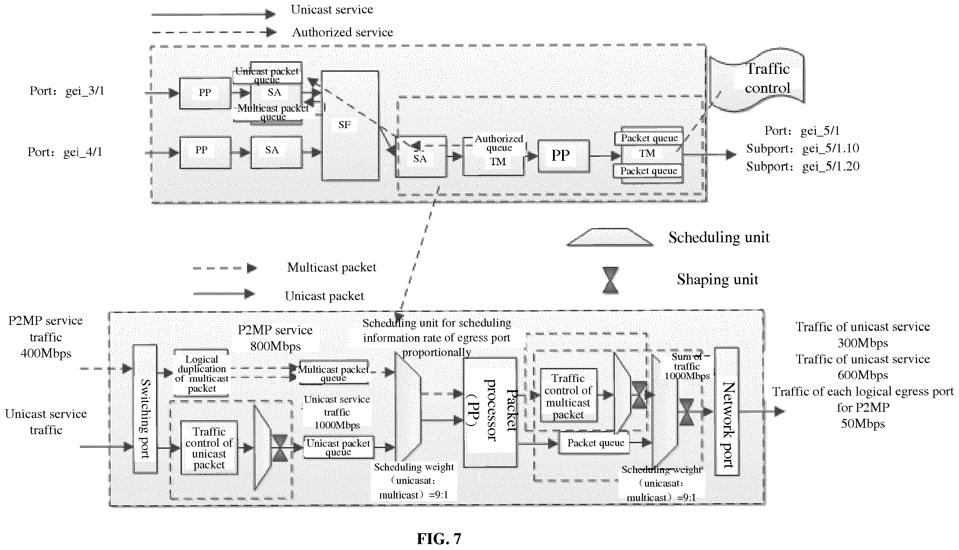

FIG. 7 is a schematic diagram illustrating traffic control according to a specific Embodiment 1 of the present disclosure.

An operator configure P2MP services (including information rate parameters) by utilizing network management peer-to-peer, and deploys video broadcasting services by utilizing P2MP services. The network management data is set to devices.

In a core device of the packet switching apparatus, as shown in FIG. 7, there are a unicast service and a P2MP service on the device. The service parameters are as shown in Table 2 below. Table 2 is a service information table according to the specific Embodiment 1, wherein the rates of egress port and ingress port are all 1000Mbps.

Table 2

| Parameter | Unicast service 1 | Unicast service 2 | P2MP service (multicast service) |
|---|---|---|---|
| ingress port | gei_3/1 | gei_4/1 | gei_3/1 |
| egress port | gei_5/1 | gei_5/1 | gei_5/1.10 gei_5/1.20 |
| information rate parameter | CIR=300Mbps, PIR= 700Mbps, CBS=64KB, PBS=128KB | CIR=600Mbps, PIR= 700Mbps, CBS=64KB, PBS=128KB | none |
| ingress traffic | 600Mbps | 600Mbps | 400Mbps (there are two logical egress ports, and the actual traffic after packet duplication is 800MBps) |

Description:

a, gei_x/y represents a physical port, wherein x is a slot of a service board and y is a port number of the service board.
b. gei_x/y.z represents a virtual port on the physical port, that is, service slot x, and a subport z on port y.
c. The P2MP service has two virtual egress ports, which belong to a same physical egress port.

The first step is to configure the unicast service and the P2MP service according to the above table. The multicast service is configured with no information rate parameters, indicating that traffic of multicast service may pass when the information rate is sufficient, and the information rate of the multicast service is not guaranteed.

The second step is P2MP service forwarding and logical duplication.

The P2MP service is a multicast service. After the multicast service packet is multicast through the switching network, a packet is transmitted to the switching access unit of the packet switching apparatus of egress board. The two virtual egress ports of the P2MP service belong to a same egress port. The switching access unit of the packet switching apparatus duplications the multicast packet, for example, the multicast packet can be duplicated once such that there is a multicast packet for each virtual egress port.

Further, a multicast ID number is generated when configuring services, and the switching access unit of the packet switching apparatus identifies the multicast ID to be duplicated according to the forwarding information carried in the packet header, performs multicast packet duplication, and the duplicated packet is scheduled to subsequent processing units by the scheduling unit.

The third step is unicast service forwarding and traffic control.

When forwarding the packet through the switching network, the unicast service request for authorization information to downlink switching access (in this example, the switching access of 5# slot), and the downlink switching access responds to the authorization request based on the shaping configuration information of the switching-side unit TM of the packet switching apparatus. The unicast service transmits packets within the traffic corresponding to the authorization.

In this embodiment, there are two unicast services, and the sum of the traffic exceeds the egress port rate (600 Mbps+600 Mbps=1200 Mbps, being greater than the egress port rate which is 1000 Mbps). The unicast packets are congested at the egress port, and the switching-side unit TM of the packet switching apparatus performs overall traffic control for unicast. During shaping by the switching-side unit TM of the packet switching apparatus, the committed information rate of the service is first guaranteed, and remaining information rate (if any) may be allocated to services in proportion, with the total information rate of the services not exceeding the peak information rate. Therefore, the unicast service 1 has a throughput of 400 Mbps, and the unicast service 2 has a throughput of 600 Mbps, that is, through the traffic control of the switching-side unit TM of the packet switching apparatus, the total unicast traffic is 1000 Mbps.

When the multicast service passes through the switching network, the self-authorization manner is adopted, that is, the traffic control of multicast service cannot be implemented at the switching-side unit TM of the packet switching apparatus. In this embodiment, the P2MP service traffic is 400 Mbps, and there are two logical egress ports. Through packet duplication by the switching access unit of the packet switching apparatus, the traffic actually transmitted to the next stage for processing is 400 Mbps×2=800 Mbps. In theory, the sum of traffic of egress ports is 1000 Mbps (sum of unicast traffic)+800 Mbps (sum of multicast traffic, wherein each P2MP egress port has a multicast information rate)=1800 Mbps, exceeding the egress port rate. The scheduling unit schedules services by using the scheduling weights of the unicast services and multicast services, to ensure that the sum of the committed information rate of the unicast services can be guaranteed to pass. The scheduling weight of the unicast service is equal to the ratio of sum of the committed information rate of the unicast and the egress port rate. In this embodiment, the sum of the committed information rate of the unicast is equal to the committed information rate of the first service (300M)+the committed information rate of the service 2 (600M), it can be seen that, the scheduling weight of the unicast packet is 900M/1000M=0.9.

Further, the scheduling weight of the multicast service is equal to a ratio of (the egress port rate (1000 Mbps) minus the sum of the committed unicast information rate (900 M)) and the egress port rate, and the scheduling weight of the multicast packet is 100 M/1000 M=0.1. That is, the ratio between the scheduling weight of the unicast service and the multicast service is 0.9:0.1=9:1. Through scheduling according to the weighted round-robin scheduling algorithm of the scheduling unit, the sum of the committed information rates of unicast packets can be guaranteed to pass even if the multicast traffic is very large. In this embodiment, the traffic scheduled to the next-stage processing unit is traffic of 1000 Mbps unicast service (with committed information rate of 900 M) and traffic of 800 Mbps multicast service.

The fourth step is the traffic control of the multicast service.

After the unicast packet and the multicast packet are processed by a packet processor, they are transmitted to the network-side unit TM of the packet switching apparatus. The scheduling unit and the shaping unit of the network-side unit TM of the packet switching apparatus implements overall traffic control.

As for weight calculation by the scheduling unit, the scheduling weight of the unicast packet=sum of the committed information rate of unicast/egress port rate, i.e., 900Mbps/1000Mbps=0.9, the scheduling weight of the multicast packet=(egress port rate-the sum of the committed information rate of unicast)/egress port rate, i.e., (1000Mbps-900Mbps)/1000Mbps=0.1. The ratio between the scheduling weight of the unicast service and the multicast service is 9:1.

In this embodiment, the egress port rate is 1000 Mbps, and the shaping unit is also shaped according to the rate. According to the scheduling weight, the egress traffic of the unicast service can be theoretically calculated as 1000 Mbps × 0.9/(0.9+0.1)=900 Mbps, and the egress traffic of the multicast service can be theoretically calculated as 1000Mbps×0.1/(0.9+0.1)=100Mbps. Packets exceeding the above information rate will be discarded.

In this embodiment, the egress traffic of the unicast service 1 is 300 Mbps, the egress traffic of the unicast service 2 is 600 Mbps, and the egress traffic of each logical egress port of the P2MP service is 50 Mbps. Obviously, the committed information rate of the service is guaranteed to pass.

The switching access unit of the packet switching apparatus implements the logical duplication of the multicast packet to limit the sum of traffic after the packet duplication, so as to prevent it from exceeding the processing capability of a subsequent processor. The two-stage traffic management (the switching-side unit TM of the packet switching apparatus and the network-side unit TM of the packet switching apparatus) is utilized to control the traffic of the unicast and multicast services, wherein the switching-side unit TM of the packet switching apparatus controls the sum of traffic of the unicast service, and through scheduling by the scheduling unit, the committed information rate of the unicast service can be guaranteed to pass; the network-side unit TM of the packet switching apparatus controls the sum of egress traffic of the unicast and multicast service.

Specific Embodiment 2: neither the unicast service nor the multicast service being configured with information rate parameter.

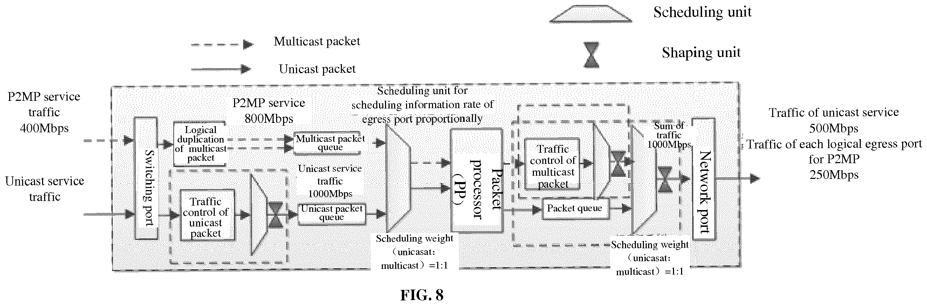

FIG. 8 is a schematic diagram illustrating traffic control according to a specific Embodiment 2 of the present disclosure.

In a core device of the packet switching apparatus, as shown in FIG. 8, there are a unicast service and a P2MP service on the device. The service parameters are as shown in Table 3 below. Table 3 is a service information table according to the specific Embodiment 2, wherein the rates of egress port and ingress port are all 1000Mbps.

Table 3

| Parameter | Unicast service 1 | Unicast service 2 | P2MP service (multicast service) |
|---|---|---|---|
| ingress port | gei_3/1 | gei_4/1 | gei_3/1 |
| egress port | gei_5/1 | gei_5/1 | gei_5/1.10 gei_5/1.20 |
| information rate parameter | none | none | none |
| ingress traffic | 600Mbps | 600Mbps | 400Mbps (there are two logical egress ports, and the actual traffic after packet duplication is 800MBps) |

The first step is to configure the unicast service and the P2MP service according to the above table. The multicast service is configured with no information rate parameters, indicating that traffic of multicast service may pass when the information rate is sufficient, and the information rate of the multicast service is not guaranteed. The unicast service is also configured with no information rate parameters, indicating that traffic of unicast service may pass when the information rate is sufficient, and the information rate of the unicast service is not guaranteed.

The second step is P2MP service forwarding and logical duplication.

The third step is unicast service forwarding and traffic control.

When forwarding the packet through the switching network, the unicast service requests for authorization information to a downlink switching access (in this example, the switching access of 5# slot), and the downlink switching access responds to the authorization request based on the shaping configuration information of the switching-side unit TM of the packet switching apparatus. The unicast service transmits packets within the traffic corresponding to the authorization.

In this embodiment, there are two unicast services, and the sum of the traffic exceeds the egress port rate (600 Mbps+600 Mbps=1200 Mbps, being greater than the egress port rate which is 1000 Mbps). The unicast packets are congested at the egress port, and the switching-side unit TM of the packet switching apparatus performs overall traffic control for unicast. The unicast service is configured with no information rate parameter, thus the sum of traffic for unicast may be controlled as long as it does not exceed the egress port rate. Therefore, the unicast service 1 has a throughput of 500 Mbps, and the unicast service 2 has a throughput of 500 Mbps, that is, through the traffic control of the switching-side unit TM of the packet switching apparatus, the total unicast traffic is 1000 Mbps.

When the multicast service passes through the switching network, the self-authorization manner is adopted, that is, the traffic control of multicast service cannot be implemented at the switching-side unit TM of the packet switching apparatus. In this embodiment, the P2MP service traffic is 400 Mbps, and there are two logical egress ports. Through packet duplication by the switching access unit of the packet switching apparatus, the traffic actually transmitted to the next stage for processing is 400 Mbps×2=800 Mbps. In theory, the sum of traffic of egress ports is 1000 Mbps (sum of unicast traffic)+800 Mbps (sum of multicast traffic, wherein each P2MP egress port has a multicast information rate)=1800 Mbps, exceeding the egress port rate. Neither the unicast service nor the multicast service is configured with information rate parameter, thus the scheduling weight of the unicast service is 0.5, the scheduling weight of the multicast service is also 0.5, and the ratio between the scheduling weight of the unicast service and the multicast service is 0.5:0.5=1 :1. Through scheduling according to the weighted round-robin scheduling algorithm of the scheduling unit, the traffic of the multicast and the unicast is scheduled to the next-stage processing unit according to the weight. In this embodiment, the traffic scheduled to the next-stage processing unit is traffic of 1000 Mbps unicast service and traffic of 800 Mbps multicast service.

The fourth step is the traffic control of the multicast service.

After the unicast packet and the multicast packet are processed by a packet processor, they are transmitted to the network-side unit TM of the packet switching apparatus. The scheduling unit and the shaping unit of the network-side unit TM of the packet switching apparatus implement overall traffic control.

As for weight calculation by the scheduling unit, since neither the unicast service nor the multicast service is configured with the committed information rate, the ratio between the scheduling weight of the unicast service and the multicast service is 1:1.

In this embodiment, the egress port rate is 1000 Mbps, and the shaping unit is also shaped according to the rate. According to the scheduling weight, the egress traffic of the unicast service can be theoretically calculated as 1000 Mbps×0.5/(0.5+0.5)=500 Mbps, and the egress traffic of the multicast service can be theoretically calculated as 1000Mbps×0.5/(0.5+0.5)=500Mbps. Packets exceeding the above information rate will be discarded.

In this embodiment, the egress traffic of the unicast service 1 is 250 Mbps, the egress traffic of the unicast service 2 is 250 Mbps, and the egress traffic of each logical egress port of the P2MP service is 250Mbps.

Specific Embodiment 3: both of the unicast service and the multicast service being configured with information rate parameter

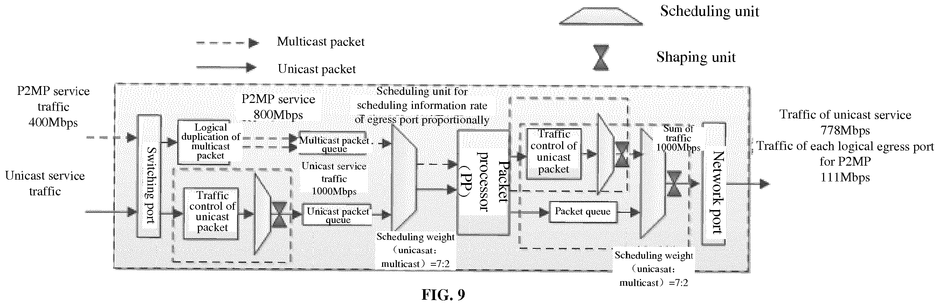

FIG. 9 is a schematic diagram illustrating traffic control according to a specific Embodiment 3 of the present disclosure.

In a core device of the packet switching apparatus, as shown in FIG. 9, there are a unicast service and a P2MP service on the device. The service parameters are as shown in Table 4 below. Table 4 is a service information table according to the specific Embodiment 3, wherein the rates of egress port and ingress port are all 1000Mbps.

Table 4

| Parameter | Unicast service 1 | Unicast service 2 | P2MP service (multicast service) |
|---|---|---|---|
| ingress port | gei_3/1 | gei_4/1 | gei_3/1 |
| egress port | gei_5/1 | gei_5/1 | gei_5/1.10 gei_5/1.20 |
| information rate parameter | CIR=300Mbps, PIR= 700Mbps, CBS=64KB, PBS=128KB | CIR=400Mbps, PIR= 700Mbps, CBS=64KB, PBS=128KB | CIR=100Mbps, PIR= 700Mbps, CBS=64KB, PBS=128KB |
| ingress traffic | 600Mbps | 600Mbps | 400Mbps (there are two logical egress ports, and the actual traffic after packet duplication is 800MBps) |

The first step is to configure the unicast service and the P2MP service according to the above table. Both of the multicast service and the unicast service are configured with information rate parameters, indicating that the information rate of the services must be guaranteed when congestion occurs.

The second step is P2MP service forwarding and logical duplication.

The third step is unicast service forwarding and traffic control.

When forwarding the packet through the switching network, the unicast service requests for authorization information to downlink switching access (in this example, the switching access of 5# slot), and the downlink switching access responds to the authorization request based on the shaping configuration information of the switching-side unit TM of the packet switching apparatus. The unicast service transmits packets within the traffic corresponding to the authorization.

In this embodiment, there are two unicast services, and the sum of the traffic exceeds the egress port rate (600 Mbps+600 Mbps=1200 Mbps, being greater than the egress port rate which is 1000 Mbps). The unicast packets are congested at the egress port, and the switching-side unit TM of the packet switching apparatus performs overall traffic control for unicast.

During scheduling, the committed information rate of the service is first guaranteed, and remaining information rate (the port rate minus the sum of the committed information rate) is allocated by the service weight (1:1 allocation as a default allocation). Therefore, through the traffic control of the switching-side unit TM of the packet switching apparatus, the total unicast traffic is 1000 Mbps.

When the multicast service passes through the switching network, the self-authorization manner is adopted, that is, the traffic control of multicast service cannot be implemented at the switching-side unit TM of the packet switching apparatus. In this embodiment, the P2MP service traffic is 400 Mbps, and there are two logical egress ports. Through packet duplication by the switching access unit of the packet switching apparatus, the traffic actually transmitted to the next stage for processing is 400 Mbps×2=800 Mbps. In theory, the sum of traffic of egress ports is 1000 Mbps (sum of unicast traffic)+800 Mbps (sum of multicast traffic, wherein each P2MP egress port has a multicast information rate)=1800 Mbps, exceeding the egress port rate. The scheduling weight of the unicast service is calculated as follows: the sum of committed information rate of unicast service/port rate=(300Mbps+400Mbps)/1000Mbps=0.7. The scheduling weight of the multicast service is calculated as follows: the sum of committed information rate of multicast service/port rate=100Mbpsx2/1000Mbps=0.2. The ratio between the scheduling weights of the unicast service and the multicast service is 0.7:0.2=7:2. Through scheduling according to the weighted round-robin scheduling algorithm of the scheduling unit, the traffic of the multicast and the unicast is scheduled to the next-stage processing unit according to the weight. In this embodiment, the traffic scheduled to the next-stage processing unit is traffic of 1000 Mbps unicast service and traffic of 800 Mbps multicast service.

The fourth step is the traffic control of the multicast service.

After the unicast packet and the multicast packet are processed by a packet processor, they are transmitted to the network-side unit TM of the packet switching apparatus. The scheduling unit and the shaping unit of the network-side unit TM of the packet switching apparatus implements overall traffic control.

As for weight calculation by the scheduling unit, reference may be made to the third step. The ratio between the scheduling weights of the unicast service and the multicast service is 7:2.

In this embodiment, the egress port rate is 1000 Mbps, and the shaping unit is also shaped according to the rate. According to the scheduling weight, the egress traffic of the unicast service can be theoretically calculated as 1000 Mbps×7/(7+2)=778 Mbps, and the egress traffic of the multicast service can be theoretically calculated as 1000Mbps×2/(7+2)=222Mbps. Packets exceeding the above information rate will be discarded.

In this example, the egress traffic of the unicast service 1 is 339 Mbps, the egress traffic of the unicast service 2 is 439 Mbps, and the egress traffic of each logical egress port of the P2MP service is 111 Mbps. Obviously, the committed information rates of the services are all guaranteed to pass.

Specific Embodiment 4: the unicast service being configured with no information rate parameter while the multicast service with information rate parameter

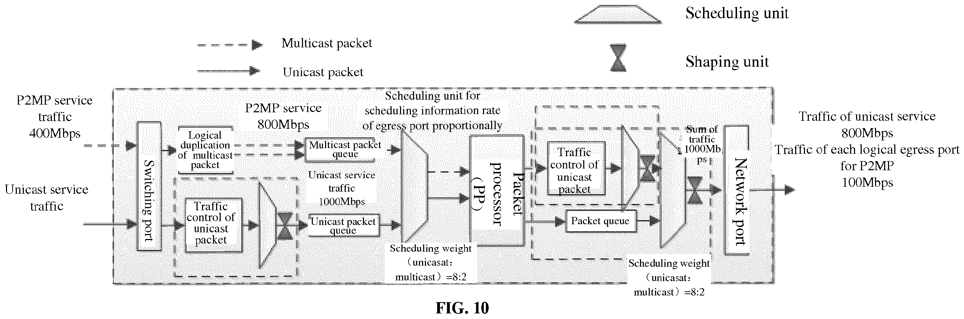

FIG. 10 is a schematic diagram illustrating traffic control according to a specific Embodiment 4 of the present disclosure.

In a core device of the packet switching apparatus, as shown in FIG. 10, there are a unicast service and a P2MP service on the device. The service parameters are as shown in Table 5 below. Table 5 is a service information table according to the specific Embodiment 4, wherein the rates of egress port and ingress port are all 1000Mbps.

Table 5

| Parameter | Unicast service 1 | Unicast service 2 | P2MP service (multicast service) |
|---|---|---|---|
| ingress port | gei_3/1 | gei_4/1 | gei_3/1 |
| egress port | gei_5/1 | gei_5/1 | gei_5/1.10 gei_5/1.20 |
| information rate parameter | none | none | CIR=100Mbps, PIR= 700Mbps, CBS=64KB, PBS=128KB |
| ingress traffic | 600Mbps | 600Mbps | 400Mbps (there are two logical egress ports, and the actual traffic after packet duplication is 800MBps) |

The first step is to configure the unicast service and the P2MP service according to the above table. The unicast service is configured with no information rate parameter, but the unicast service is configured with information rate parameter, indicating that the committed information rate of the service must be guaranteed when congestion occurs.

The second step is P2MP service forwarding and logical duplication.

The third step is unicast service forwarding and traffic control.

When forwarding the packet through the switching network, the unicast service requests for authorization information to downlink switching access (in this example, the switching access of 5# slot), and the downlink switching access responds to the authorization request based on the shaping configuration information of the switching-side unit TM of the packet switching apparatus. The unicast service transmits packets within the traffic corresponding to the authorization.

In this embodiment, there are two unicast services, and the sum of the traffic exceeds the egress port rate (600 Mbps+600 Mbps=1200 Mbps, being greater than the egress port rate which is 1000 Mbps). The unicast packets are congested at the egress port, and the switching-side unit TM of the packet switching apparatus performs overall traffic control for unicast. As such, through the traffic control of the switching-side unit TM of the packet switching apparatus, the total unicast traffic is 1000 Mbps.

When the multicast service passes through the switching network, the self-authorization manner is adopted, that is, the traffic control of multicast service cannot be implemented at the switching-side unit TM of the packet switching apparatus. In this embodiment, the P2MP service traffic is 400 Mbps, and there are two logical egress ports. Through packet duplication by the switching access unit of the packet switching apparatus, the traffic actually transmitted to the next stage for processing is 400 Mbps×2=800 Mbps. In theory, the sum of traffic of egress ports is 1000 Mbps (sum of unicast traffic)+800 Mbps (sum of multicast traffic, wherein each P2MP egress port has a multicast information rate)=1800 Mbps, exceeding the egress port rate. The scheduling weight of the multicast service is calculated as follows: the sum of committed information rate of multicast service/port rate=100Mbps×2/1000Mbps=0.2. The unicast service is configured with no information rate parameter, and the scheduling weight of the unicast service is calculated as follows: (port rate-the sum of committed information rate of multicast service)/port rate=(1000Mbps - 2×100Mbps)/1000Mbps=0.8.

The ratio between the scheduling weights of the unicast service and the multicast service is 0.8:0.2=8:2. Through scheduling according to the weighted round-robin scheduling algorithm of the scheduling unit, the traffics of the multicast and the unicast are scheduled to the next-stage processing unit according to the weight. In this embodiment, the traffics scheduled to the next-stage processing unit are traffic of 1000 Mbps unicast service and traffic of 800 Mbps multicast service.

The fourth step is the traffic control of the multicast service.

After the unicast packet and the multicast packet are processed by a packet processor, the unicast packet and the multicast packet are transmitted to the network-side unit TM of the packet switching apparatus. The scheduling unit and the shaping unit of the network-side unit TM of the packet switching apparatus implement overall traffic control.

As for weight calculation by the scheduling unit, reference may be made to the third step. The ratio between the scheduling weights of the unicast service and the multicast service is 8:2.

In this embodiment, the egress port rate is 1000 Mbps, and the shaping unit is also shaped according to the rate. According to the scheduling weight, the egress traffic of the unicast service can be theoretically calculated as 1000 Mbps×8/(8+2)=800 Mbps, and the egress traffic of the multicast service can be theoretically calculated as 1000Mbps×2/(8+2)=200Mbps. Packets exceeding the above information rate will be discarded.

In this example, the egress traffic of the unicast service 1 is 400 Mbps, the egress traffic of the unicast service 2 is 400 Mbps, and the egress traffic of each logical egress port of the P2MP service is 100 Mbps. Obviously, the committed information rates of the services are guaranteed to pass.

Through performing the method described in the present application, the switching access unit of the packet switching apparatus implements duplication of multicast packets to control the total traffic after packet duplication, to prevent it from exceeding the processing capability of subsequent processing units; the switching-side unit TM of the packet switching apparatus implements the traffic control of the unicast service; through setting weights of unicast packets and multicast packets of the scheduling unit of the switching-side unit TM of the packet switching apparatus, the committed information rate of the unicast service is guaranteed; through scheduling of the scheduling unit of the network-side unit TM of the packet switching apparatus and the traffic control of the shaping unit, the total traffic of the multicast service is also controlled, which solves the problem of the contention of the unicast service and the multicast service when unicast service and the multicast service coexist, so that the committed information rate for both of the unicast service and the multicast service are can be guaranteed.

Embodiment 2

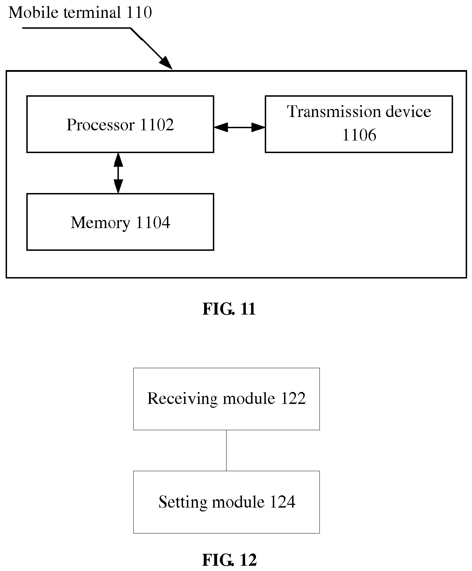

The method embodiment provided in Embodiment 1 of the present application can be executed in a mobile terminal, a computer terminal or the like. Taking a case where the method is executed in the mobile terminal as an example, FIG. 11 is a block diagram illustrating a hardware structure of a mobile terminal implementing a traffic control method according to an embodiment of the present disclosure. As shown in FIG. 11, mobile terminal 110 may include: one or more (merely one is shown) processor 1102 (the processor 1102 may include, but is not limited to, a processing device such as a microprocessor MCU or a programmable logic device FPGA), a memory 1104 configured to store data, and a transmission device 1106 configured with a communication function. It will be understood by those skilled in the art that, the structure shown in FIG. 11 is merely illustrative and does not limit the structure of the above electronic device. For example, the mobile terminal 110 may also include more or less components than those shown in FIG. 11, or have a different configuration than that shown in FIG. 11.

The memory 1104 can be configured to store a software program and module for an application software, such as a program instruction/module corresponding to a traffic control method in the embodiment of the present disclosure. Through running a software program and module stored in the memory 1104, the processor 1102 may perform various functional applications and data processing, implementing the method above. Memory 1104 may include a high speed random access memory, and may also include a non-volatile memory, such as one or more magnetic storage devices, flash memory, or other non-volatile solid state memory. In some examples, memory 1104 can further include a remote memory relative to processor 1102, the remote memory can be connected to mobile terminal 110 over a network. Examples of such networks include, but are not limited to, an Internet, an intranet, a local area network, a mobile communication network, and a combination thereof.

A transmission device 1106 is configured to receive or transmit data via a network. Specific examples for the above network may include a wireless network provided by a communication provider of the mobile terminal 110. In an example, the transmission device 1106 includes a Network Port Controller (NIC) that can be connected to other network devices through a base station to communicate with the Internet. In an example, the transmission device 1106 can be a Radio Frequency (RF) module configured to communicate with the Internet wirelessly.

In this embodiment, a traffic control method running on the mobile terminal is provided, including: transmits, by a user equipment, configuration information to a packet switching apparatus, wherein a committed information rate of a multicast service and/or a unicast service is carried in the configuration information, and setting, by the packet switching apparatus, an egress information rate of the multicast service and/or the unicast service at a network-side unit of a packet switching apparatus according to the committed information rate.

Optionally, the committed information rate is further configured to be applied to at least one of the following steps: setting, an egress information rate of the unicast service at a switching-side unit of the packet switching apparatus, by the switching-side unit of the packet switching apparatus according to the committed information rate of the unicast service; and setting, an egress information rate of the multicast service and/or the unicast service at the network-side unit of the packet switching apparatus, by the network-side unit of the packet switching apparatus according to the committed information rate.

Optionally, the configuration information further includes at least one of: a service parameter, a peak information rate, a committed burst size, and a peak burst size.

Through the description of the above embodiments, those skilled in the art can clearly understand that the method according to the above embodiment can be implemented by software in combination with necessary general hardware platform, and of course by hardware, but in many cases, the former is a better implementation. Based on such understanding, a substantial portion or a portion of the technical solution of the present disclosure that contribute to existing art may be embodied in the form of a software product stored in a storage medium (e.g., a ROM/RAM, a disk, a disc), and includes a number of instructions for causing a terminal device (which may be a cell phone, a computer, a server, or a network device, etc.) to perform the method of various embodiments of the present disclosure.

Embodiment 3

The embodiment further provides a traffic control device, which is configured to implement the above-mentioned embodiments and exemplary embodiments, related description thereof which has been described would not be repeated herein again. As used herein, the term "module" may be a combination of software and/or hardware for implementing a predetermined function. Although the devices described in the following embodiments are implemented in software, hardware or a combination of software and hardware is also possible and contemplated.

FIG. 12 is a block diagram illustrating a structure of a traffic control device configured as a packet switching apparatus according to an embodiment of the present disclosure. As shown in FIG. 12, the traffic control device includes: a receiving module 122 and a setting module 124.

The receiving module 122 is configured to receive configuration information, wherein a committed information rate of a multicast service and/or a unicast service is carried in the configuration information.

The setting module 124 is connected to the receiving module 122, and is configured to set an egress information rate of the multicast service and/or the unicast service at a network-side unit of a packet switching apparatus according to the committed information rate.

Optionally, the setting module 124 is further configured to set the egress information rate of the multicast service and/or the unicast service at a network-side unit of a packet switching apparatus to be greater than or equal to the committed information rate.

Optionally, the setting module 124 is further configured to perform one of the following steps: setting, in a case where a first committed information rate of the unicast service is carried but a second committed information rate of the multicast service is not carried in the configuration information, a first egress information rate of the unicast service to be greater than or equal to the first committed information rate, and setting a difference between a preset total egress information rate and the first egress information rate as a second egress information rate of the multicast service; setting, in a case where the second committed information rate of the multicast service is carried but the first committed information rate of the unicast service is not carried in the configuration information, the second egress information rate of the multicast service to be greater than or equal to the second committed information rate, and setting a difference between the preset total egress information rate and the second egress information rate as the first egress information rate of the unicast service; setting, in a case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information rate; and setting, in a case where the first committed information rate of the unicast service and the second committed information rate of the multicast service are not carried in the configuration information, the first egress information rate of the unicast service to be half of the preset total egress information rate, and setting the second egress information rate of the multicast service to be half of the preset total egress information rate..

Optionally, the step of setting, in the case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information

$$A1= \left(\frac{B1}{B1+B2}\right)*C$$

rate includes: the first egress information rate satisfying the following formula: , wherein A1 represents the first egress information rate, B1 represents the first committed information rate, B2 represents the second committed information rate, and C represents the preset total egress information rate; and the second egress information

$$A2= \left(\frac{B2}{B1+B2}\right)*C$$

rate satisfying the following formula: , wherein A2 represents the second egress information rate, B1 represents the first committed information rate, B2 represents the second committed information rate, and C represents the preset total egress information rate.

Optionally, the setting module is further configured to set, through a network-side unit of the packet switching apparatus, the egress information rate of the multicast service and/or the unicast service at the network-side unit of the packet switching apparatus according to the committed information rate.

Optionally, the setting module is further configured to set, through a switching-side unit of the packet switching apparatus, the egress information rate of the unicast service at the switching-side unit of the packet switching apparatus according to the committed information rate of the unicast service.

Optionally, the configuration information further includes at least one of: a service parameter, a peak information rate, a committed burst size, and a peak burst size.

Optionally, the setting module is further configured to: duplicate, through a switching access unit of the packet switching apparatus, a packet of the multicast service according to the service parameter, wherein the service parameter carries one of: an identification ID number of the multicast service, an egress logical port to which a multicast packet of the multicast service is to be duplicated, a number of duplications corresponding to the egress logical port, wherein the egress logical port is located in a network-side unit of the packet switching apparatus.

Optionally, an information rate parameter of the multicast service is applicable to multiple egress logical ports of the network-side unit of the packet switching apparatus, and the multiple egress logical ports are configured with the same information rate parameter, wherein the information rate parameter includes: the committed information rate, the peak information rate, the committed burst size, and the peak burst size.

According to another embodiment of the present disclosure, a traffic control device is provided. The traffic control device is disposed in a user equipment and includes: a transmitting module configured to transmit configuration information to the packet switching apparatus, wherein a committed information rate of a multicast service and/or a unicast service is carried in the configuration information, and an egress information rate of the multicast service and/or the unicast service at a network-side unit of the packet switching apparatus is set by the packet switching apparatus according to the committed information rate.

Optionally, the committed information rate is further configured to be applied to at least one of followings steps: setting, an egress information rate of the unicast service at a switching-side unit of the packet switching apparatus, by the switching-side unit of the packet switching apparatus according to the committed information rate of the unicast service; and setting, an egress information rate of the multicast service and/or the unicast service at the network-side unit of the packet switching apparatus, by the network-side unit of the packet switching apparatus according to the committed information rate.

Optionally, the configuration information further includes at least one of: a service parameter, a peak information rate, a committed burst size, and a peak burst size.

It should be noted that each of the above modules may be implemented by software or hardware. For the latter, each of the above modules may be implemented by, but not limited to: the foregoing modules being all located in a same processor; or, the above modules being located, in any combinations, in different processors.

Embodiment 4

According to another embodiment of the present disclosure, a traffic control system is provided, including: a user equipment, configured to transmit configuration information to a packet switching apparatus, wherein a committed information rate of a multicast service and/or a unicast service is carried in the configuration information; and the packet switching apparatus configured to receive the configuration information, and set an egress information rate of the multicast service and/or the unicast service at a network-side unit of the packet switching apparatus according to the committed information rate.

Optionally, one of the following scenarios may occurs: setting, by the packet switching apparatus and in a case where a first committed information rate of the unicast service is carried but a second committed information rate of the multicast service is not carried in the configuration information transmitted by the user equipment, a first egress information rate of the unicast service to be greater than or equal to the first committed information rate, and setting a difference between a preset total egress information rate and the first egress information rate as a second egress information rate of the multicast service; setting, by the packet switching apparatus and in a case where the second committed information rate of the multicast service is carried but the first committed information rate of the unicast service is not carried in the configuration information transmitted by the user equipment, the second egress information rate of the multicast service to be greater than or equal to the second committed information rate, and setting a difference between the preset total egress information rate and the second egress information rate as the first egress information rate of the unicast service; setting, by the packet switching apparatus and in a case where the first committed information rate of the unicast service and the second committed information rate of the multicast service are carried in the configuration information transmitted by the user equipment, the first egress information rate of the unicast service to be greater than or equal to the first committed information rate, and setting the second egress information rate of the multicast service to be greater than or equal to the second committed information rate; and setting, by the packet switching apparatus and in a case where the first committed information rate of the unicast service and the second committed information rate of the multicast service are not carried in the configuration information transmitted by the user equipment, the first egress information rate of the unicast service to be half of the preset total egress information rate, and setting the second egress information rate of the multicast service to be half of the preset total egress information rate.

Optionally, the setting, by the packet switching apparatus and in the case where the first committed information rate of the unicast service and the second committed information rate of the multicast service are carried in the configuration information transmitted by the user equipment, the first egress information rate of the unicast service to be greater than or equal to the first committed information rate, and setting the second egress information rate of the multicast service to be greater than or equal to the second committed information rate includes: the first egress information rate satisfying the following formula: $A1 = \left(\dfrac{B1}{B1+B2}\right) * C$ , wherein A1 represents the first egress information rate, B1 represents the first committed information rate, B2 represents the second committed information rate, and C represents the preset total egress information rate; and the second egress information rate satisfying the following formula:

$A2 = \left(\dfrac{B2}{B1+B2}\right) * C$ , wherein A2 represents the second egress information rate, B1 represents the first committed information rate, B2 represents the second committed information rate, and C represents the preset total egress information rate.

According to still another embodiment of the present disclosure, a storage medium is further provided. The storage medium is configured to store program code executable to perform the following steps: receiving configuration information, wherein a committed information rate of a multicast service and/or a unicast service is carried in the configuration information; and setting an egress information rate of the multicast service and/or the unicast service at a network-side unit of a packet switching apparatus according to the committed information rate.

Optionally, the storage medium is further configured to store program code executable to perform the following steps: transmitting, by a user equipment, configuration information to a packet switching apparatus, wherein a committed information rate of a multicast service and/or a unicast service is carried in the configuration information; and setting, by the packet switching apparatus, an egress information rate of the multicast service and/or the unicast service at a network-side unit of the packet switching apparatus according to the committed information rate

According to the disclosure, the service configuration information that is transmitted to the network management side carries the committed information rate, which is set to indicate the egress information rate finally allocated to the unicast service or the multicast service , and when the information rate allocation is performed, the network management side allocates information rate for the unicast service or the multicast service according to the committed information rate. Thereby, a problem that the service traffic is difficult to guarantee in existing technology can be solved, and a user requirement for successful unicast service or multicast service can be achieved.

Embodiment 5

An embodiment of the disclosure further provides a storage medium. Optionally, in the embodiment, the storage medium may be configured to store program code executable to perform the following steps S1-S2.

At step S1, configuration information is received, wherein a committed information rate of a multicast service and/or a unicast service is carried in the configuration information.

At step S2, an egress information rate of the multicast service and/or the unicast service at a network-side unit of a packet switching apparatus is set according to the committed information rate.

Optionally, the storage medium is further configured to store program code executable to perform the following steps S3-S4.

At step S3, a user equipment transmits configuration information to a packet switching apparatus.

At step S4, a committed information rate of a multicast service and/or a unicast service is carried in the configuration information, and the packet switching apparatus sets an egress information rate of the multicast service and/or the unicast service at a network-side unit of the packet switching apparatus according to the committed information rate.

Optionally, in this embodiment, the foregoing storage medium may include, but is not limited to, a USB flash drive, a Read-Only Memory (ROM), a Random Access Memory (RAM), a mobile hard disk, a magnetic disk or an optical disc that can store program code.

Optionally, in this embodiment, the processor performs the steps in the foregoing embodiments according to the stored program code in the storage medium.

For example, specific examples in this embodiment may refer to examples described in foregoing embodiments and optional embodiments, and details will not be described herein again.

It will be apparent to those skilled in the art that, the various modules or steps of the present disclosure described above can be implemented by a general-purpose computing device and they can be integrated on a single computing device or distributed across a network of multiple computing devices. Alternatively, they may be implemented by program code executable by the computing device, such that they may be stored in the storage device for execution by the computing device, and in some cases, the steps shown or described may be performed in an order different from the order described herein, or they may be separately fabricated into individual integrated circuit modules, or a plurality of modules or steps thereamong may be fabricated as a single integrated circuit module. As such, the disclosure is not limited to any specific combination of hardware and software.

## Industrial applicability

According to the foregoing technical solutions provided by the present disclosure, the service configuration information that is transmitted to the network management side carries the committed information rate, which is set to indicate the egress information rate finally allocated to the unicast service or the multicast service, and when the information rate allocation is performed, the network management side allocates information rate for the unicast service or the multicast service according to the committed information rate. Thereby, a problem that the service traffic is difficult to guarantee in existing technology can be solved, and a user requirement for successful unicast service or multicast service can be achieved.

## Claims

1. A traffic control method, comprising:

   receiving configuration information, wherein a committed information rate of a multicast service and/or a unicast service is carried in the configuration information (S402); and
   setting an egress information rate of the multicast service and/or the unicast service at a network-side unit of a packet switching apparatus according to the committed information rate (S404), wherein,
   prior to step of setting the egress information rate of the multicast service and/or the unicast service at the network-side unit of the packet switching apparatus according to the committed information rate, the method further comprising:
   setting, by a switching-side unit of the packet switching apparatus, the egress information rate of the unicast service at the switching-side unit of the packet switching apparatus according to the committed information rate of the unicast service.

2. The method of claim 1, wherein the setting the egress information rate of the multicast service and/or the unicast service at the network-side unit of the packet switching apparatus according to the committed information rate comprises one of the following steps:

   setting, in a case where a first committed information rate of the unicast service is carried but a second committed information rate of the multicast service is not carried in the configuration information, a first egress information rate of the unicast service to be greater than or equal to the first committed information rate, and setting a difference between a preset total egress information rate and the first egress information rate as a second egress information rate of the multicast service;
   setting, in a case where the second committed information rate of the multicast service is carried but the first committed information rate of the unicast service is not carried in the configuration information, the second egress information rate of the multicast service to be greater than or equal to the second committed information rate, and setting a difference between the preset total egress information rate and the second egress information rate as the first egress information rate of the unicast service;

setting, in a case where in a case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information rate; and

setting, in a case where the first committed information rate of the unicast service and the second committed information rate of the multicast service are not carried in the configuration information, the first egress information rate of the unicast service to be half of the preset total egress information rate, and setting the second egress information rate of the multicast service to be half of the preset total egress information rate.

3. The method of claim 2, wherein the step of setting, in the case where the first committed information rate of the unicast service and the second committed information rate of the multicast service are carried in the configuration information, the first egress information rate of the unicast service to be greater than or equal to the first committed information rate, and setting the second egress information rate of the multicast service to be greater than or equal to the second committed information rate comprises:

the first egress information rate satisfying the formula $A1 = (\dfrac{B1}{B1+B2}) * C$ , wherein A1 represents the first egress information rate, B1 represents the first committed information rate, B2 represents the second committed information rate, and C represents the preset total egress information rate; and

the second egress information rate satisfying the formula $A2 = (\dfrac{B2}{B1+B2}) * C$ , wherein A2 represents the second egress information rate, B1 represents the first committed information rate, B2 represents the second committed information rate, and C represents the preset total egress information rate.

4. The method of claim 1, wherein the configuration information further comprises at least one of:
a service parameter, a peak information rate, a committed burst size, and a peak burst size.

5. The method of claim 4, wherein the method further comprises:
duplicating, by a switching access unit of the packet switching apparatus, a packet of the multicast service according to the service parameter, wherein the service parameter carries one of: an identification ID number of the multicast service, an egress logical port to which a multicast packet of the multicast service is to be duplicated, a number of duplications corresponding to the egress logical port, wherein the egress logical port is located in a network-side unit of the packet switching apparatus.

6. The method of claim 4, wherein the method further comprises:
an information rate parameter of the multicast service is applicable to multiple egress logical ports of the network-side unit of the packet switching apparatus, and the multiple egress logical ports are configured with the same information rate parameter, wherein the information rate parameter comprises: the committed information rate, the peak information rate, the committed burst size, and the peak burst size.

7. A traffic control method, comprising:

transmitting, by a user equipment, configuration information to a packet switching apparatus, wherein a committed information rate of a multicast service and/or a unicast service is carried in the configuration information, and an egress information rate of the multicast service and/or the unicast service at a network-side unit of the packet switching apparatus is set by the packet switching apparatus according to the committed information rate, wherein,
the committed information rate is further configured to be applied to the following steps:

setting, an egress information rate of the unicast service at a switching-side unit of the packet switching apparatus, by the switching-side unit of the packet switching apparatus according to the committed information rate of the unicast service; and
setting, an egress information rate of the multicast service and/or the unicast service at the network-side unit of the packet switching apparatus, by the network-side unit of the packet switching apparatus according to the committed information rate.

8. The method of claim 7, wherein the configuration information further comprises at least one of:
a service parameter, a peak information rate, a committed burst size, and a peak burst size.

9. A packet switching apparatus, comprising:

a communication device configured to receive configuration information, wherein a committed information rate of a multicast service and/or a unicast service is carried in the configuration information; and
a processor configured to set an egress information rate of the unicast service at a switching-side unit of the packet switching apparatus according to the committed information rate of the unicast service and set the egress information rate of the multicast service and/or the unicast service at a network-side unit of a packet switching apparatus according to the committed information rate.

10. A traffic control system, 2. comprising:

a user equipment, configured to transmit configuration information to a packet switching apparatus, wherein a committed information rate of a multicast service and/or a unicast service is carried in the configuration information; and
the packet switching apparatus, configured to receive the configuration information, set an egress information rate of the unicast service at a switching-side unit of the packet switching apparatus according to the committed information rate and set the egress information rate of the multicast service and/or the unicast service at a network-side unit of the packet switching apparatus according to the committed information rate.

11. A storage medium, comprising a stored program which is executable to perform the method of any of claims 1 to 8.

12. A processor, configured to run a program which is executable to perform the method of any of claims 1 to 8.

**Patentansprüche**

1. Verkehrssteuerungsverfahren, umfassend:

Empfangen von Konfigurationsinformationen, wobei eine festgeschriebene Informationsrate eines Multicast-Dienstes und/oder eines Unicast-Dienstes in den Konfigurationsinformationen (S402) übermittelt wird; und
Festlegen einer Ausgangsinformationsrate des Multicast-Dienstes und/oder des Unicast-Dienstes an einer netzwerkseitigen Einheit einer Paketumschaltungsvorrichtung gemäß der festgeschriebenen Informationsrate (S404), wobei
das Verfahren vor dem Schritt des Festlegens der Ausgangsinformationsrate des Multicast-Dienstes und/oder des Unicast-Dienstes an der netzwerkseitigen Einheit der Paketumschaltungsvorrichtung gemäß der festgeschriebenen Informationsrate ferner Folgendes umfasst:
Festlegen, durch eine umschaltungsseitige Einheit der Paketumschaltungsvorrichtung, der Ausgangsinformationsrate des Unicast-Dienstes an der umschaltungsseitigen Einheit der Paketumschaltungsvorrichtung gemäß der festgeschriebenen Informationsrate des Unicast-Dienstes.

2. Verfahren nach Anspruch 1, wobei das Festlegen der Ausgangsinformationsrate des Multicast-Dienstes und/oder des Unicast-Dienstes an der netzwerkseitigen Einheit der Paketumschaltungsvorrichtung gemäß der festgeschriebenen Informationsrate einen der folgenden Schritte umfasst:

für den Fall, dass eine erste festgeschriebene Informationsrate des Unicast-Dienstes in den Konfigurationsinformationen übermittelt wird, eine zweite festgeschriebene Informationsrate des Multicast-Dienstes jedoch nicht, Festlegen einer ersten Ausgangsinformationsrate des Unicast-Dienstes derart, dass sie größer oder gleich der ersten festgeschriebenen Informationsrate ist, und Festlegen einer Differenz zwischen einer zuvor festgelegten Gesamtausgangsinformationsrate und der ersten Ausgangsinformationsrate als eine zweite Ausgangsinformationsrate des Multicast-Dienstes;
für den Fall, dass die zweite festgeschriebene Informationsrate des Multicast-Dienstes in den Konfigurationsinformationen übermittelt wird, die erste festgeschriebene Informationsrate des Unicast-Dienstes jedoch nicht, Festlegen der zweiten Ausgangsinformationsrate des Multicast-Dienstes derart, dass sie größer oder gleich der zweiten festgeschriebenen Informationsrate ist, und Festlegen einer Differenz zwischen der zuvor festgelegten Gesamtausgangsinformationsrate und der zweiten Ausgangsinformationsrate als die erste Ausgangsinformationsrate des Unicast-Dienstes;

für den Fall, dass die erste festgeschriebene Informationsrate des Unicast-Dienstes und die zweite festgeschriebene Informationsrate des Multicast-Dienstes in den Konfigurationsinformationen übermittelt werden, Festlegen der ersten Ausgangsinformationsrate des Unicast-Dienstes derart, dass sie größer oder gleich der ersten festgeschriebenen Informationsrate ist, und Festlegen der zweiten Ausgangsinformationsrate des Multicast-Dienstes derart, dass sie größer oder gleich der zweiten festgeschriebenen Informationsrate ist; und

für den Fall, dass die erste festgeschriebenen Informationsrate des Unicast-Dienstes und die zweite festgeschriebene Informationsrate des Multicast-Dienstes nicht in den Konfigurationsinformationen übermittelt werden, Festlegen der ersten Ausgangsinformationsrate des Unicast-Dienstes derart, dass sie der Hälfte der zuvor festgelegten Gesamtausgangsinformationsrate entspricht, und Festlegen der zweiten Ausgangsinformationsrate des Multicast-Dienstes derart, dass sie der Hälfte der zuvor festgelegten Gesamtausgangsinformationsrate entspricht.

3. Verfahren nach Anspruch 2, wobei der Schritt des Festlegens der ersten Ausgangsinformationsrate des Unicast-Dienstes derart, dass sie größer oder gleich der ersten festgeschriebenen Informationsrate ist, und Festlegens der zweiten Ausgangsinformationsrate des Multicast-Dienstes derart, dass sie größer oder gleich der zweiten festgeschriebenen Informationsrate ist, für den Fall dass die erste festgeschriebene Informationsrate des Unicast-Dienstes und die zweite festgeschriebene Informationsrate des Multicast-Dienstes in den Konfigurationsinformationen übermittelt werden, Folgendes umfasst:

die erste Ausgangsinformationsrate erfüllt die Formel $A1 = \left(\frac{B1}{B1+B2}\right) * C$, wobei A1 die erste Ausgangsinformationsrate darstellt, B1 die erste festgeschriebene Informationsrate darstellt, B2 die zweite festgeschriebene Informationsrate darstellt und C die zuvor festgelegte Gesamtausgangsinformationsrate darstellt; und

die zweite Ausgangsinformationsrate erfüllt die Formel $A2 = \left(\frac{B2}{B1+B2}\right) * C$, wobei A2 die zweite Ausgangsinformationsrate darstellt, B1 die erste festgeschriebene Informationsrate darstellt, B2 die zweite festgeschriebene Informationsrate darstellt und C die zuvor festgelegte Gesamtausgangsinformationsrate darstellt.

4. Verfahren nach Anspruch 1, wobei die Konfigurationsinformationen ferner mindestens eines des Folgenden umfassen:

einen Dienstparameter, eine Spitzeninformationsrate, eine festgeschriebene Burstgröße und eine Spitzenburstgröße.

5. Verfahren nach Anspruch 4, wobei das Verfahren ferner Folgendes umfasst:

Duplizieren eines Pakets des Multicast-Dienstes gemäß dem Dienstparameter durch eine Umschaltungszugriffseinheit der Paketumschaltungsvorrichtung, wobei der Dienstparameter eines des Folgenden übermittelt: eine Identifikationsnummer (ID-Nummer) des Multicast-Dienstes, einen Ausgangslogikanschluss, an den ein Multicast-Paket des Multicast-Dienstes dupliziert werden soll, eine dem Ausgangslogikanschluss entsprechende Anzahl von Duplizierungen, wobei sich der Ausgangslogikanschluss in einer netzwerkseitigen Einheit der Paketumschaltungsvorrichtung befindet.

6. Verfahren nach Anspruch 4, wobei das Verfahren ferner Folgendes umfasst:

ein Informationsratenparameter des Multicast-Dienstes gilt für mehrere Ausgangslogikanschlüsse der netzwerkseitigen Einheit der Paketumschaltungsvorrichtung und die mehreren Ausgangslogikanschlüsse sind mit dem gleichen Informationsratenparameter konfiguriert, wobei der Informationsratenparameter Folgendes umfasst: die festgeschriebene Informationsrate, die Spitzeninformationsrate, die festgeschriebene Burstgröße und die Spitzenburstgröße.

7. Verkehrssteuerungsverfahren, umfassend:

Übertragen von Konfigurationsinformationen an eine Paketumschaltungsvorrichtung durch ein Benutzerendgerät, wobei eine festgeschriebene Informationsrate eines Multicast-Dienstes und/oder eines Unicast-Dienstes in den Konfigurationsinformationen übermittelt wird und eine Ausgangsinformationsrate des Multicast-Dienstes und/oder des Unicast-Dienstes an einer netzwerkseitigen Einheit der Paketumschaltungsvorrichtung durch die Paketumschaltungsvorrichtung gemäß der festgeschriebenen Informationsrate festgelegt wird, wobei die festgeschriebene Informationsrate ferner dazu konfiguriert, auf die folgenden Schritte angewendet zu werden:

Festlegen einer Ausgangsinformationsrate des Unicast-Dienstes an einer umschaltungsseitigen Einheit der Paketumschaltungsvorrichtung durch die umschaltungsseitige Einheit der Paketumschaltungsvorrichtung gemäß der festgeschriebenen Informationsrate des Unicast-Dienstes; und

Festlegen einer Ausgangsinformationsrate des Multicast-Dienstes und/oder des Unicast-Dienstes an der netzwerkseitigen Einheit der Paketumschaltungsvorrichtung durch die netzwerkseitige Einheit der Paketumschaltungsvorrichtung gemäß der festgeschriebenen Informationsrate.

8. Verfahren nach Anspruch 7, wobei die Konfigurationsinformationen ferner mindestens eines des Folgenden umfassen:

einen Dienstparameter, eine Spitzeninformationsrate, eine festgeschriebene Burstgröße und eine Spitzenburstgröße.

9. Paketumschaltungsvorrichtung, umfassend:

eine Kommunikationseinrichtung, die zum Empfangen von Konfigurationsinformationen konfiguriert ist, wobei eine festgeschriebene Informationsrate eines Multicast-Dienstes und/oder eines Unicast-Dienstes in den Konfigurationsinformationen übermittelt wird; und

einen Prozessor, der dazu konfiguriert ist, eine Ausgangsinformationsrate des Unicast-Dienstes an einer umschaltungsseitigen Einheit der Paketumschaltungsvorrichtung gemäß der festgeschriebenen Informationsrate des Unicast-Dienstes festzulegen und die Ausgangsinformationsrate des Multicast-Dienstes und/oder des Unicast-Dienstes an einer netzwerkseitigen Einheit einer Paketumschaltungsvorrichtung gemäß der festgeschriebenen Informationsrate festzulegen.

10. Verkehrssteuerungssystem, umfassend:

ein Benutzerendgerät, das zum Übertragen von Konfigurationsinformationen an eine Paketumschaltungsvorrichtung konfiguriert ist, wobei eine festgeschriebene Informationsrate eines Multicast-Dienstes und/oder eines Unicast-Dienstes in den Konfigurationsinformationen übermittelt wird; und

die Paketumschaltungsvorrichtung, die dazu konfiguriert ist, die Konfigurationsinformationen zu empfangen, eine Ausgangsinformationsrate des Unicast-Dienstes an einer umschaltungsseitigen Einheit der Paketumschaltungsvorrichtung gemäß der festgeschriebenen Informationsrate festzulegen und die Ausgangsinformationsrate des Multicast-Dienstes und/oder des Unicast-Dienstes an einer netzwerkseitigen Einheit der Paketumschaltungsvorrichtung gemäß der festgeschriebenen Informationsrate festzulegen.

11. Speichermedium, das ein gespeichertes Programm umfasst, das ausführbar ist, um das Verfahren nach einem der Ansprüche 1 bis 8 durchzuführen.

12. Prozessor, der dazu konfiguriert ist, ein Programm auszuführen, das ausführbar ist, um das Verfahren nach einem der Ansprüche 1 bis 8 durchzuführen.

**Revendications**

1. Procédé de commande de trafic, comprenant :

la réception d'informations de configuration, dans lequel un débit d'informations garanti d'un service de multidiffusion et/ou d'un service de monodiffusion est transporté dans les informations de configuration (S402) ; et l'établissement d'un débit d'informations de sortie du service de multidiffusion et/ou du service de monodiffusion au niveau d'une unité côté réseau d'un appareil de commutation de paquets selon le débit d'informations garanti (S404), dans lequel,

avant l'étape d'établissement du débit d'informations de sortie du service de multidiffusion et/ou du service de monodiffusion au niveau de l'unité côté réseau de l'appareil de commutation de paquets selon le débit d'informations garanti, le procédé comprenant en outre :

l'établissement, par une unité côté commutation de l'appareil de commutation de paquets, du débit d'informations de sortie du service de monodiffusion au niveau de l'unité côté commutation de l'appareil de commutation de paquets selon le débit d'informations garanti du service de monodiffusion.

2. Procédé selon la revendication 1, dans lequel la définition du débit d'informations de sortie du service de multidiffusion et/ou du service de monodiffusion au niveau de l'unité côté réseau de l'appareil de commutation de paquets en fonction du débit d'informations garanti comprend l'une des étapes suivantes :

l'établissement, dans un cas où un premier débit d'informations garanti du service de monodiffusion est transporté mais qu'un second débit d'informations garanti du service de multidiffusion n'est pas transporté dans les informations de configuration, d'un premier débit d'informations de sortie du service de monodiffusion pour qu'il soit supérieur ou égal au premier débit d'informations garanti, et l'établissement d'une différence entre un débit d'informations de sortie total préétabli et le premier débit d'informations de sortie en tant que second débit d'informations de sortie du service de multidiffusion ;

l'établissement, dans un cas où le second débit d'informations garanti du service de multidiffusion est transporté mais que le premier débit d'informations garanti du service de monodiffusion n'est pas transporté dans les informations de configuration, du second débit d'informations de sortie du service de multidiffusion pour qu'il soit supérieur ou égal au second débit d'informations garanti, et l'établissement d'une différence entre le débit d'informations de sortie total préétabli et le second débit d'informations de sortie en tant que premier débit d'informations de sortie du service de monodiffusion ;

l'établissement, dans un cas où dans un cas où le premier débit d'informations garanti du service de monodiffusion et le second débit d'informations garanti du service de multidiffusion sont transportés dans les informations de configuration, du premier débit d'informations de sortie du service de monodiffusion pour qu'il soit supérieur ou égal au premier débit d'informations garanti, et l'établissement du second débit d'informations de sortie du service de multidiffusion pour qu'il soit supérieur ou égal au second débit d'informations garanti ; et

l'établissement, dans un cas où le premier débit d'informations garanti du service de monodiffusion et le second débit d'informations garanti du service de multidiffusion ne sont pas transportés dans les informations de configuration, du premier débit d'informations de sortie du service de monodiffusion pour qu'il soit à la moitié du débit d'informations de sortie total préétabli, et l'établissement du second débit d'informations de sortie du service de multidiffusion pour qu'il soit à la moitié du débit d'informations de sortie total préétabli.

3. Procédé selon la revendication 2, dans lequel l'étape d'établissement, dans le cas où le premier débit d'informations garanti du service de multidiffusion et le second débit d'informations garanti du service de multidifussion sont transportés dans les informations de configuration, du premier débit d'informations garanti du service de multidiffusion pour qu'il soit supérieur ou égal au premier débit d'informations garanti, et l'établissement du second débit d'informations de sortie du service de multidiffusion pour qu'il soit supérieur ou égal au second débit d'informations garanti comprend :

le premier débit d'informations de sortie satisfaisant la formule $A1 = (\frac{B1}{B1+B2}) * C$, dans lequel A1 représente le premier débit d'informations de sortie, B1 représente le premier débit d'informations garanti, B2 représente le second débit d'informations garanti et C représente le débit d'informations de sortie total préétabli ; et

le second débit d'informations de sortie satisfaisant la formule $A2 = (\frac{B2}{B1+B2}) * C$, dans lequel A2 représente le second débit d'informations de sortie, B1 représente le premier débit d'informations garanti, B2 représente le second débit d'informations garanti et C représente le débit d'informations de sortie total préétabli.

4. Procédé selon la revendication 1, dans lequel les informations de configuration comprennent en outre au moins l'un parmi :
un paramètre de service, un débit d'informations maximal, une taille de rafale garantie et une taille de rafale maximale.

5. Procédé selon la revendication 4, dans lequel le procédé comprend en outre :
la duplication, par une unité d'accès de commutation de l'appareil de commutation de paquets, d'un paquet du service de multidiffusion selon le paramètre de service, dans lequel le paramètre de service transporte l'un parmi :
un numéro ID d'identification du service de multidiffusion, un port logique de sortie vers lequel un paquet de multidiffusion du service de multidiffusion doit être dupliqué, un nombre de duplications correspondant au port logique de sortie, dans lequel le port logique de sortie est situé dans une unité côté réseau de l'appareil de commutation de paquets.

6. Procédé selon la revendication 4, dans lequel le procédé comprend en outre :
un paramètre de débit d'informations du service de multidiffusion est applicable à de multiples ports logiques de sortie de l'unité côté réseau de l'appareil de commutation de paquets, et les multiples ports logiques de sortie sont configurés avec le même paramètre de débit d'informations, dans lequel le paramètre de débit d'informations comprend : le débit d'informations garanti, le débit d'informations maximal, la taille de rafale garantie et la taille de rafale maximale.

7. Procédé de commande de trafic, comprenant :

la transmission, par un équipement d'utilisateur, d'informations de configuration à un appareil de commutation de paquets, dans lequel un débit d'informations garanti d'un service de multidiffusion et/ou d'un service de monodiffusion est transporté dans les informations de configuration, et un débit d'informations de sortie du service de multidiffusion et/ou du service de monodiffusion au niveau d'une unité côté réseau de l'appareil de commutation de paquets est établi par l'appareil de commutation de paquets selon le débit d'informations garanti, dans lequel,
le débit d'informations garanti est en outre configuré pour être appliqué aux étapes suivantes :

l'établissement, d'un débit d'informations de sortie du service de monodiffusion au niveau d'une unité côté commutation de l'appareil de commutation de paquets, par l'unité côté commutation de l'appareil de commutation de paquets selon le débit d'informations garanti du service de monodiffusion ; et
l'établissement, d'un débit d'informations de sortie du service de multidiffusion et/ou du service de monodiffusion au niveau de l'unité côté réseau de l'appareil de commutation de paquets, par l'unité côté réseau de l'appareil de commutation de paquets selon le débit d'informations garanti.

8. Procédé selon la revendication 7, dans lequel les informations de configuration comprennent en outre au moins l'un parmi :
un paramètre de service, un débit d'informations maximal, une taille de rafale garantie et une taille de rafale maximale.

9. Appareil de commutation de paquets, comprenant :

un dispositif de communication configuré pour recevoir des informations de configuration, dans lequel un débit d'informations garanti d'un service de multidiffusion et/ou d'un service de monodiffusion est transporté dans les informations de configuration ; et
un processeur configuré pour établir un débit d'informations de sortie du service de monodiffusion au niveau d'une unité côté commutation de l'appareil de commutation de paquets selon le débit d'informations garanti du service de monodiffusion et établir le débit d'informations de sortie du service de multidiffusion et/ou du service de monodiffusion au niveau d'une unité côté réseau d'un appareil de commutation de paquets selon le débit d'informations garanti.

10. Système de commande de trafic, comprenant :

un équipement d'utilisateur, configuré pour transmettre des informations de configuration à un appareil de commutation de paquets, dans lequel un débit d'informations garanti d'un service de multidiffusion et/ou d'un service de monodiffusion est transporté dans les informations de configuration ; et
l'appareil de commutation de paquets, configuré pour recevoir les informations de configuration, établir un débit d'informations de sortie du service de monodiffusion au niveau d'une unité côté commutation de l'appareil de commutation de paquets selon le débit d'informations garanti du service de monodiffusion et établir le débit d'informations de sortie du service de multidiffusion et/ou du service de monodiffusion au niveau d'une unité côté réseau de l'appareil de commutation de paquets selon le débit d'informations garanti.

11. Support de stockage, comprenant un programme stocké qui est exécutable pour mettre en œuvre le procédé selon l'une quelconque des revendications 1 à 8.

12. Processeur, configuré pour exécuter un programme qui est exécutable pour mettre en œuvre le procédé selon l'une quelconque des revendications 1 à 8.

Unicast
service

Traffic control

**FIG. 1**

Unicast service

Authorized distribution

Traffic control

**FIG. 2**

eNB                    PTN carrier network              MBMS_GW

                                                              P2MP service

A

                           M            W                        Core

B

                    P2MP service
                    Other service

C

                         N

**FIG. 3**

| Receive configuration information, wherein a committed information rate of a multicast service and/or a unicast service is carried in the configuration information | S402 |

| Set an egress information rate of the multicast service and/or the unicast service at a network-side unit of a packet switching apparatus according to the committed information rate | S404 |

**FIG. 4**

FIG. 5

Switching port

Traffic control of unicast packet

Logical duplication of multicast packet

Unicast packet queue

Multicast packet queue

Scheduling unit for scheduling information rate of egress port proportionally

Packet processor (PP)

Packet queue

Traffic control of multicast packet

Weight of unicast packet and multicast packet to guarantee the committed information rate of service

Network port

Multicast packet

Unicast packet

Shaping unit

Scheduling unit

**FIG. 6**

FIG. 7

**FIG. 8**

**FIG. 9**

Scheduling unit

Shaping unit

Multicast packet

Unicast packet

P2MP service traffic 400Mbps

Unicast service traffic

Switching port

Logical duplication of multicast packet

Traffic control of unicast packet

P2MP service 800Mbps

Multicast packet queue

Unicast service traffic 1000Mbps

Unicast packet queue

Scheduling unit for scheduling information rate of egress port proportionally

Scheduling weight (unicasat: multicast) =8:2

Packet processor (PP)

Traffic control of unicast packet

Packet queue

Sum of traffic 1000Mbps

Scheduling weight (unicasat: multicast) =8:2

Network port

Traffic of unicast service 800Mbps

Traffic of each logical egress port for P2MP 100Mbps

**FIG. 10**

Mobile terminal 110

| Processor 1102 | ↔ | Transmission device 1106 |

Memory 1104

**FIG. 11**

Receiving module 122

Setting module 124

**FIG. 12**

**REFERENCES CITED IN THE DESCRIPTION**

**Patent documents cited in the description**

- CN 103716169 A
- CN 103430499 A
- WO 2007113645 A2